# EUROPÄISCHE PATENTANMELDUNG

(11) **EP 0 573 959 A1**
(43) Veröffentlichungstag der Anmeldung: **15.12.1993**
(21) Anmeldenummer: 93109201.9
(22) Anmeldetag: 08.06.1993
(51) Int. Cl.: B01D 21/26, B01D 36/04, B04B 1/00, B04B 5/10, B04B 7/00

(54) **Verfahren zur Entfernung von Partikeln aus einer Flüssigkeit, Anlage zur Durchführung des Verfahrens und Zentrifuge, insbesondere für das Verfahren und/oder die Anlage**

(30) Priorität: 09.06.1992 DE 4218897
(71) Anmelder: VITROSEP S. L., E-17007 Girona (ES)
(72) Erfinder: Ubanell Blanquet, Marcal, E-17007 Girona (ES); Solé Calduch, Josep, E-17007 Girona (ES); Molas Pagés, Josep, E-17007 Girona (ES)
(74) Vertreter: Fincke, Karl Theodor, Dipl.-Phys. Dr.

(57) **Zusammenfassung**

Verfahren zur Entfernung von Partikeln, insbesondere aus Glas, die bei einem Bearbeitungsprozeß, insbesondere bei einem Schleifprozeß, in eine Flüssigkeit, insbesondere in Wasser,geraten und zur Rückführung der von den Partikeln befreiten Flüssigkeit zum Bearbeitungsprozeß,
**dadurch gekennzeichnet,**
daß die von dem Bearbeitungsprozeß abgeführte, die Partikel enthaltende Flüssigkeit durch Schwerkraftabsetzung teilweise von den Partikeln befreit wird,
daß die teilweise von den Partikeln befreite Flüssigkeit zentrifugiert wird,
daß die beim Zentrifugieren im wesentlichen vollständig von den Partikeln befreite Flüssigkeit wieder in den Bearbeitungsprozeß rückgeführt wird,
daß zusammen mit Resten der Flüssigkeit beim zentrifugieren abgeschiedene Partikel mittels eines Filters von den Resten der Flüssigkeit getrennt werden und daß auch die Reste der Flüssigkeit wieder in den Bearbeitungsprozeß rückgeführt werden.

## Beschreibung

Die Erfindung betrifft ein Verfahren zur Entfernung von Partikeln, insbesondere aus Glas, die bei einem Bearbeitungsprozeß, insbesondere bei einem Schleifprozeß, in eine Flüssigkeit, insbesondere in Wasser, geraten und zur Rückführung der von den Partikeln befreiten Flüssigkeit zum Bearbeitungsprozeß.

Aufgabe der Erfindung ist es, ein Verfahren dieser Art anzugeben, mit dem die Flüssigkeit praktisch vollständig von den Partikeln in einfacher Weise- bei geringem Raumbedarf zuverlässig abgetrennt und dem Bearbeitungsprozeß wieder zugeführt werden kann.

Zur Lösung dieser Aufgabe ist das Verfahren dadurch gekennzeichnet, daß die von dem Bearbeitungsprozeß abgeführte, die partikel enthaltende Flüssigkeit durch Schwerkraftabsetzung teilweise von den Partikeln befreit wird, daß die teilweise von den Partikeln befreite Flüssigkeit zentrifugiert wird, daß die beim Zentrifugieren im wesentlichen vollständig von den Partikeln befreite Flüssigkeit wieder in den Bearbeitungsprozeß rückgeführt wird, daß zusammen mit Resten der Flüssigkeit beim Zentrifugieren abgeschiedene Partikel mittels eines Filters von den Resten der Flüssigkeit getrennt werden und daß auch die Reste der Flüssigkeit wieder in den Bearbeitungsprozeß rückgeführt werden.

Da es häufig erforderlich ist, die Flüssigkeit dem Bearbeitungsprozeß gekühlt zuzuführen, ist das Verfahren bevorzugt dadurch gekennzeichnet, daß die Flüssigkeit vor ihrer Rückführung in den Bearbeitungsprozeß gekühlt wird.

Als besonders zuverlässig und wartungsarm hat sich zur Durchführung des Verfahrens eine Anlage erwiesen, die gekennzeichnet ist durch eine erste Leitungsanordnung, die eine Abführpumpe einer Bearbeitungsmaschine über eine - vorzugsweise manuell - verstellbare erste Ventilanordnung mit wenigstens einem Klärbecken verbindet, durch eine zweite Leitungsanordnung, die das wenigstens eine Klärbecken über eine - vorzugsweise manuell - verstellbare zweite Ventilanordnung und eine Förderpumpe mit einem Flüssigkeitseinlaß einer Zentrifuge verbindet, durch eine dritte Leitungsanordnung, die einen Flüssigkeitsauslaß der Zentrifuge über eine - vorzugsweise manuell - verstellbare dritte Ventilanordnung mit dem wenigstens einen Klärbecken verbindet, durch eine Zuführpumpe, die zentrifugierte Flüssigkeit aus dem wenigstens einen Klärbecken einem Flüssigkeitseinlaß der Bearbeitungsmaschine über eine Leitung zuführt, und durch eine vierte Leitungsanordnung, die einen Partikelauslaß der Zentrifuge über ein Filter mit wenigstens einem Klärbecken verbindet.

Zur Abführung zentrifugierter Flüssigkeit ist bevorzugt vorgesehen, daß von der dritten Leitungsanordnung eine Abführleitung abgezweigt ist, in der sich eine - vorzugsweise manuell - verstellbare vierte Ventilanordnung befindet.

Zur Speisung der Ansaugseite der Förderpumpe mit einer Leitungsflüssigkeit ist bevorzugt vorgesehen, daß von der zweiten Leitungsanordnung eine erste Zuführungsleitung abgezweigt ist, in der sich eine - vorzugsweise manuell - verstellbare fünfte Ventilanordnung befindet.

Zur Speisung des wenigstens einen Klärbeckens mit einer Leitungsflüssigkeit ist bevorzugt vorgesehen, daß von der dritten Leitungsanordnung eine zweite Zuführungsleitung abgezweigt ist, in der sich eine - vorzugsweise manuell - verstellbare sechste Ventilanordnung befindet.

Zur Steuerung des Partikelauslasses der Zentrifuge mit einer Leitungsflüssigkeit ist bevorzugt vorgesehen, daß eine zu einem Steuereinlaß der Zentrifuge führende dritte Zuführungsleitung vorgesehen ist, in der sich eine - vorzugsweise manuell - verstellbare siebte Ventilanordnung befindet.

Um dem Bearbeitungsprozeß von den Klärbecken zuzuführende Flüssigkeit kühlen zu können, ist die Anlage bevorzugt dadurch gekennzeichnet, daß sich in dem wenigstens einen Klärbecken eine Kühlschlange befindet, die im Kreislauf von einem Kühler mit einem flüssigen Kühlmittel beschickt wird.

Zur Abscheidung auch sehr feiner Partikel im periodischen Dauerbetrieb hat sich bevorzugt eine Zentrifuge bewährt, die gekennzeichnet ist durch eine vertikale Antriebswelle, an deren oberem Ende eine sich nach unten erweiternde Diffusoranordnung angebracht ist, in die von oben durch eine Einführungsleitung eine Partikel enthaltende Flüssigkeit einzuführen ist, durch eine mit dem oberen Ende der Diffusoranordnung verbundene, sich nach unten erweiternde obere Schale, durch Löcher in einer den Raum zwischen der Diffusoranordnung und der oberen Schale oben begrenzenden Wand zur Abführung von von Partikeln befreiter Flüssigkeit, durch eine die Diffusoranordnung umschließende, sich nach oben erweiternde untere Schale, deren oberer Umfangsrand einen Durchmesser hat, der im wesentlichen gleich dem Durchmesser des unteren Umfangsrands der oberen Schale ist und abgedichtet an diesen unteren Umfangsrand andrückbar ist, durch eine Nabe an einem unteren Boden der unteren Schale, die in Längsrichtung der Antriebswelle relativ zu der Antriebswelle abgedichtet verschiebbar ist und durch eine Leitungsanordnung zur Abführung von abzentrifugierten Partikeln und Resten der Flüssigkeit, die bei voneinander abgehobenen Schalen zwischen dem unteren Umfangsrand der oberen Schale und dem oberen Umfangsrand der unteren Schale mündet.

Diese Zentrifuge kann auch für andere Zwecke verwendet werden, hat also eine besondere Bedeutung für sich.

Zur Beschleunigung der Abscheidung ist die Zentrifuge bevorzugt dadurch gekennzeichnet, daß die Diffusoranordnung einen oberen Diffusor und einen unteren Diffusor aufweist, wobei der Öffnungswinkel des unteren Diffusors größer ist als der Öffnungswinkel des oberen Diffusors.

Zur erleichterten Montage der Diffusoranordnung ist die Zentrifuge bevorzugt dadurch gekennzeichnet, daß die Diffusoranordnung zu ihrer Befestigung am oberen Ende der Antriebswelle einen inneren Ringflansch aufweist, der auf das obere Ende der Antriebswelle aufzusetzen ist und der mit einer ihn von oben durchsetzenden, in ein Innengewinde im oberen Ende der Antriebswelle eingreifenden Schraube am oberen Ende der Antriebswelle zu befestigen ist.

Zur Steuerung der Abführung von abgeschiedenen Partikeln ist die Zentrifuge bevorzugt dadurch gekennzeichnet, daß an das obere Ende der Antriebswelle unterhalb der unteren Schale eine die untere Schale umfassende Wanne mit einem Umfangsrand angesetzt ist, der den oberen Umfangsrand der unteren Schale abgedichtet umfaßt und daß die Wanne mit der unteren Schale einen Raum begrenzt, in den ein Druckmittel zum Anheben der unteren Schale einführbar und aus dem das Druckmittel zum Absenken der unteren Schale abführbar ist.

Zur konstruktiven Vereinfachung der Zentrifuge ist bevorzugt vorgesehen, daß das untere Ende des oberen Diffusors auf das obere Ende des unteren Diffusors mittels einer abgedichteten Steckverbindung aufgesteckt ist und/oder daß sich die Wand am oberen Ende des oberen Diffusors befindet und einen nach oben über eine Ringwand abgesetzten Umfangsflansch aufweist, der auf einem Kragen am oberen Ende der oberen Schale aufsitzt, und/oder daß die Ringwand eine Abführungskammer begrenzt, in der die Löcher münden, und/oder daß der Umfangsflansch zusammen mit einem die Abführungskammer oben begrenzenden Ringdeckel mittels einer Überwurfmutter auf dem Kragen befestigt ist.

Um den Strom der Flüssigkeit aus der Abführungskammer zu laminieren, ist die Zentrifuge bevorzugt dadurch gekennzeichnet, daß in der Abführungskammer radial nach innen zu axial nach oben gerichteten Abführungskanälen führende Eintrittskanäle vorgesehen sind.

Konstruktiv ist besonders vorteilhaft, wenn die Abführungskanäle um einen mit der Einführungsleitung verbundenen Einführungsrohrabschnitt heraum angeordnet sind und/oder wenn der Einführungsrohrabschnitt abgedichtet eine mit einem Abführungsstutzen versehene Kammer durchsetzt, die mit den Eintrittskanälen und den Abführungskanälen einstückig ist.

Um den Strom der Flüssigkeit in dem oberen Diffusor zu laminieren, sind bevorzugt in der Innenoberfläche des oberen Diffusors im wesentlichen in Radialebenen des oberen Diffusors verlaufende Nuten vorgesehen.

Zum Zusammenwirken der Schalen und der Wanne ist bevorzugt vorgesehen, daß sich die Nabe der unteren Schale nach oben konisch verjüngt und auf eine sich ebenfalls nach oben konisch verjüngende Nabe der Wanne aufgesteckt ist und daß die Nabe der Wanne auf das sich ebenfalls konisch nach oben verjüngende obere Ende der Antriebswelle aufgesteckt ist.

Eine besonders rasche Abscheidung auch feinster Partikel erhält man, wenn die Zentrifuge dadurch gekennzeichnet ist, daß sich am Umfang der Diffusoranordnung eine in den Bereich zwischen den Umfangsrändern der Schalen radial gerichtete erste Ringscheibe befindet.

Die Abscheidung der Partikel in der Zentrifuge wird gefördert, wenn sich in einem Mittelbereich des oberen Diffusors eine radial gerichtete zweite Ringscheibe befindet.

Die Abscheidung feiner Partikel durch grobe Partikel wird nicht gestört, wenn die Zentrifuge dadurch gekennzeichnet ist, daß der untere Diffusor in den Innenraum der Zentrifuge gerichtete Durchbrechungen aufweist.

Um die auf die abzuscheidenden Partikel wirkenden Zentrifugalkräfte zu vergrößeren und damit die Abscheidung zu beschleunigen, ist die Zentrifuge bevorzugt dadurch gekennzeichnet, daß sich an der Innenoberfläche des unteren Diffusors - vorzugsweise acht - im wesentlichen in Radialebenen des unteren Diffusors verlaufende Schaufeln befinden.

Um die angehobene untere Schale mit der oberen Schale abzudichten, ist die Zentrifuge bevorzugt dadurch gekennzeichnet, daß der obere Umfangsrand der unteren Schale axial an den unteren Umfangsrand der oberen Schale über eine Ringdichtung, vorzugsweise aus Polyamid, andrückbar ist.

Um zu verhindern, daß der gesteuert beschickbare Raum mit dem Innenraum der Zentrifuge und/oder dem Auslaß der Zentrifuge bei von der oberen Schale abgehobener Unterschale kommuniziert, ist die Zentrifuge bevorzugt dadurch gekennzeichnet, daß sich zwischen dem oberen Umfangsrand der unteren Schale und dem Umfangsrand der Wanne eine Ringdichtung, vorzugsweise aus Kautschuk, und darüber ein Ringabstreifer, vorzugsweise aus Polyamid, befinden.

Die Zentrifuge ist selbstansaugend. In der Zuführungsleitung der Zentrifuge herrscht also bei Betrieb der Zentrifuge ein variabler Unterdruck, der zu Steuerzwecken verwendet werden kann. Dementsprechend ist die Zentrifuge bevorzugt dadurch gekennzeichnet, daß an die Einführungsleitung drei einstellbare Unterdrucksensoren angeschlossen sind, von denen der erste die Beschickung der Zentrifuge mit Partikeln enthaltender Flüssigkeit steuert, von denen der zweite die Abführung der in der Zentrifuge abgeschiedenen Partikel steuert und von denen der dritte die Zentrifuge anhält, wenn der Volumenanteil der Partikel im Innenraum der Zentrifige infolge eines Fehlers ein vorgegebenes Maß übersteigt.

Bevorzugt ist überdies vorgesehen, daß sich an der Einführungsleitung ein Elektroventil befindet, das zur Abführung von Partikeln aus der Zentrifuge Luft in den Innenraum der Zentrifuge läßt, die eine Trennung der Schalen voneinander unterstützt und eine Nullung der Unterdrucksensoren ermöglicht.

Die Erfindung wird im folgenden an einem Ausführungsbeispiel unter Hinweis auf die beigefügten Zeichnungen beschrieben.

Fig. 1 zeigt das Schema einer Anlage.

Fig. 2 zeigt im wesentlichen im Achsschnitt eine Zentrifuge.

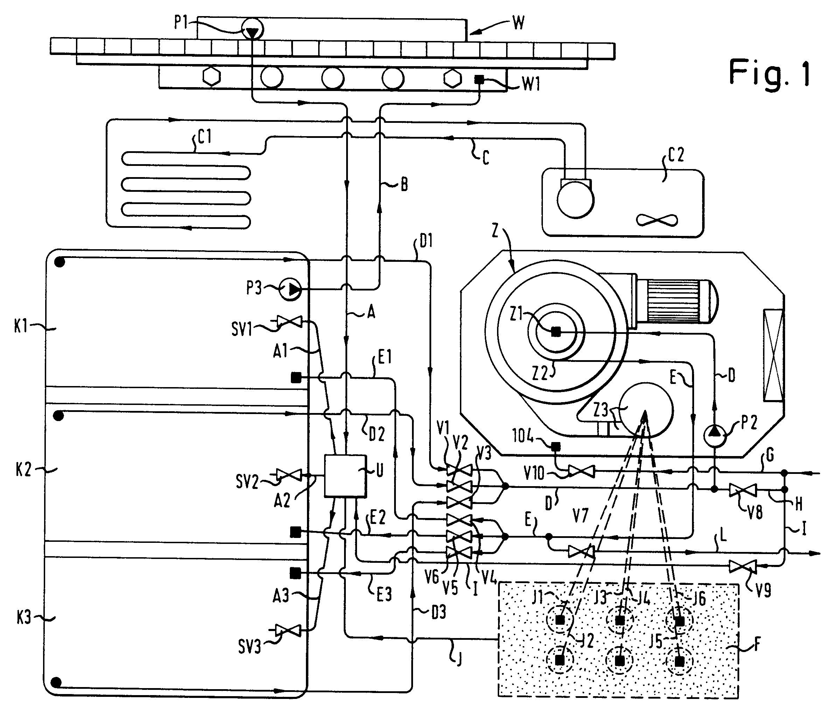

Fig. 1 zeigt eine Glasschleifmaschine W, von der durch eine Pumpe P1 über eine Leitung A Schleifwasser abgeführt und einem Verteilerbehälter U, durch ein in diesem Verteilerbehälter U befindliches Filter für verhältnismäßig große Partikel, beispielsweise mit einem Durchmesser von 1 mm, zugeführt wird. Aus dem Verteilerbehälter U gelangt das Schleifwasser über eine der Leitungen A1, A2 oder A3 und ein in dieser Leitung A1, A2 oder A3 befindliches, von Hand geöffnetes Ventil SV1, SV2 oder SV3 in ein erstes der Klärbecken K1, K2 oder K3. Aus diesem ersten Klärbecken K1, K2 oder K3 gelangt die Schleifflüssigkeit, nachdem sich ein gewisser Anteil der in ihr enthaltenen, verhältnismäßig großen Partikel, beispielsweise mit einem Durchmesser von mehr als 1,5 mm, in dem ersten Klärbecken K1, K2 oder K3 abgesetzt hat, durch eine der Leitungen D1, D2 oder D3 und ein in dieser Leitung D1, D2 oder D3 befindliches, von Hand geöffnetes Ventil V1, V2, V3 und eine Leitung D über eine Förderpumpe P2 in den Flüssigkeitseinlaß Z1 einer Zentrifuge Z. In der Zentrifuge Z von Partikeln befreites Wasser wird über einen Flüssigkeitsauslaß Z2 und eine Leitung E über ein von Hand geöffnetes Ventil V4, V5 oder V6 und eine diesem Ventil V4, V5 oder V6 zugeordnete Leitung E1, E2 oder E3 einem zweiten Klärbecken K1, K2 oder K3 über den Verteilerbehälter U zugeführt. Die in der Zentrifuge Z abgeschiedenen Partikel mit Restwasser werden über einen Partikelauslaß Z3 und Leitungen J1, J2, J3, J4, J5, J6 in ein Filter F eingeführt, in dem die Partikel verbleiben und aus dem das Restwasser über eine Leitung J in den Verteilerbehälter U und von dort aus über die Leitungen A1, A2, A3 und die Ventile SV1, SV2 und SV3 in das zweite Klärbecken K1, K2 oder K3 gelangt. In dem in Fig. 1 dargestellten Zustand ist das zweite Klärbecken das Klärbecken K1. Aus diesem Klärbecken K1 wird mittels einer Pumpe P3 vollständig von Partikeln befreites Wasser über eine Leitung B in einen Einlaß W1 der Glasschleifmaschine W zurückgeführt.

Im Betrieb werden von den Klärbecken K1, K2, K3 nur jeweils zwei benutzt. Im Wechsel wird diesen Klärbecken Schleifwasser und geklärtes Wasser zugeführt. Wenn sich in einem dieser Klärbecken zu viele Partikel abgesetzt haben und dieses Klärbecken gereinigt werden muß, wird es abgeschaltet und das dritte Klärbecken angeschaltet, so daß der Betrieb praktisch nicht unterbrochen werden muß. Dementsprechend werden die Ventile V1, V2, V3, V4, V5, V6 geöffnet bzw. geschlossen. Leitungewasser kann über eine Leitung G und ein steuerbares Ventil V10 der Zentrifuge Z zugeführt werden, um als Druckmittel die Zentrifuge Z zu öffnen und zu schließen. Das Leitungswasser kann ebenfalls über eine Leitung H und ein steuerbares Ventil V8 der Leitung D zugeführt werden, um den Einlaß der Pumpe P2 zu füllen. Schließlich kann das Leitungswasser über eine Leitung I und ein steuerbares Ventil V9 auch dem Verteilerbehälter U und von dort aus über die Leitungen A1, A2, A3 und die Ventile SV1, SV2, SV3 den Klärbecken K1, K2, K3 zugeführt werden, um die Klärbecken K1, K2, K3 zu reinigen.

In dem Klärbecken K1 ist eine Kühlschlange C1 dargestellt, die im Kreislauf über eine Leitung C von einem Kühler C2 mit einem Kühlmittel, insbesondere mit Freon, beschickt werden kann.

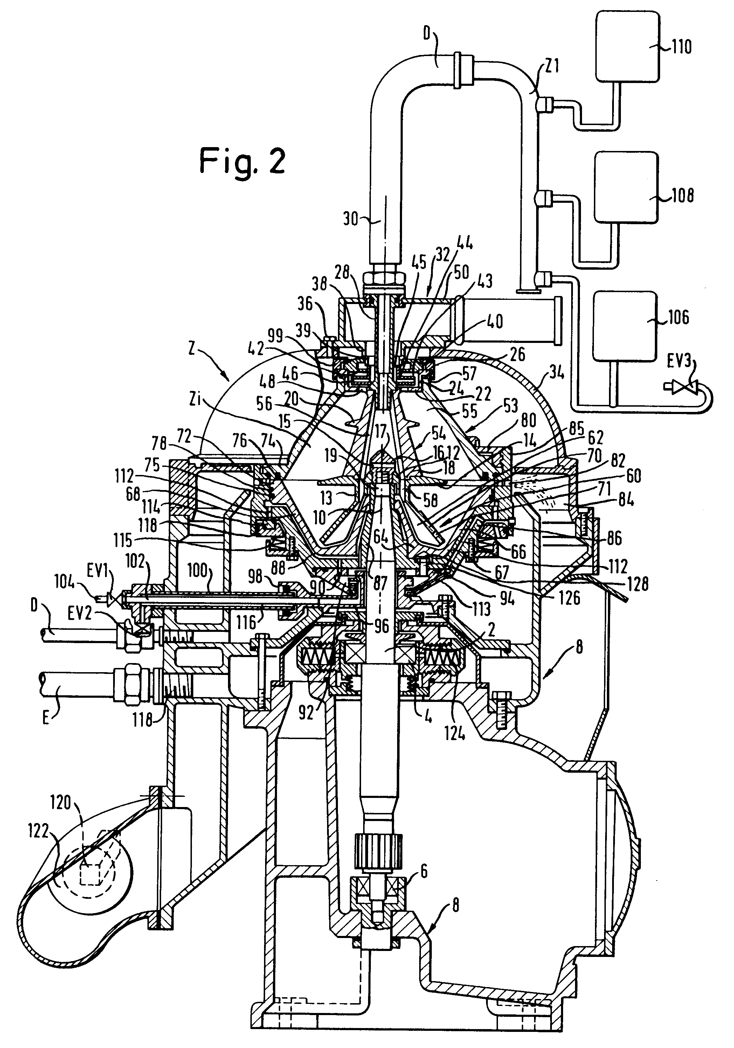

Die Zentrifuge Z nach Fig. 2 weist eine vertikale Antriebswelle 2 auf, die in einigem Abstand von ihrem oberen Ende über zwei Lager 4, 6 in einem Gehäuse 8 gelagert ist. Das obere Lager 4 enthält eine Federanordnung 124, die die Antriebswelle 2 senkrecht hält und Schwingungen der Antriebswelle 2 dämpft. Das obere Ende 10 der Antriebswelle 2 verjüngt sich nach oben konisch. Auf die Stirnfläche des oberen Endes 10 ist ein Ringflansch 12 einer Ringscheibe 14 aufgesetzt und mit einer Schraube 16 gesichert, die einen sich nach oben konisch verjüngenden Kopf 17 mit einer Querbohrung 15 aufweist, durch die ein Werkzeug zum Festschrauben der Schraube 16 in ein Innengewinde 19 im oberen Ende 10 der Antriebswelle 2 zu schrauben ist. Auf die Oberseite der Ringscheibe 14 ist über eine Nut-Feder-Verbindung 18 ein sich nach oben auch in seiner Wandstärke verjüngender oberer Diffusor 54 gesteckt, an den im Mittelbereich seiner Höhe eine Ringscheibe 20 ausgeformt ist. Der obere Diffusor 54 geht oben einstückig in einen radial nach außen gerichteten Boden 22 über, der seinerseits in eine nach oben gerichtete, eine Abführungskammer 43 radial außen begrenzende Ringwand 24 mit einem oberen Umfangsflansch 26 übergeht. In das obere Ende des oberen Diffusors 54 ist ein Einführungsrohrabschnitt 28 einer Einführungsleitung 30 für das Wasser-Partikel-Gemisch gesteckt. Diese Einführungsleitung 30 entspricht der Leitung D mit dem Einlaß Z1 in Fig. 1. Der Einführungsrohrabschnitt 28 ist von einer Kammer 32 umschlossen, die auf einem Gehäusedeckel 34 mittels Schrauben 36 befestigt ist. An der Kammer 32 befindet sich ein nach unten innen abgestufter Stutzen 38, der über eine Schulter 39 auf einem Ringdeckel 40 aufsitzt. Der Ringdeckel 40 weist innen unten einen radial nach innen gerichteten Flansch 42 auf, an dem ein Tragstück 44 eines Kranzes von Eintrittskanälen 46 befestigt ist, durch die aus Löcher 48 im Boden 22 erst radial nach innen und dann durch Abführungskanäle 45 axial nach oben von Partikeln befreites Wasser in die Kammer 32 aus der Zentrifuge Z einzuführen ist. Der Ringdeckel 40 und der Umfangsflansch 26 sind mittels einer Uberwurfmutter 99 auf einem Kragen 57 einer noch zu beschreibenden oberen Schale 53 befestigt. Aus der Kammer 32 wird dieses Wasser durch einen Abführungsstutzen 50 abgeführt. In der Innenfläche des oberen Diffusors 54 befinden sich im wesentlichen axial verlaufende Nuten 56, die unten in axiale Bohrungen 58 in einem Träger 13 des Ringflanschs 12 und der Ringscheibe 14 übergehen.

An dem Träger 13 ist unten einstückig unterhalb der Ringscheibe ein unterer Diffusor 70 angesetzt, der sich nach oben verjüngt und einen größeren Öffnungswinkel aufweist als der obere Diffusor 54. An der Innenfläche dieses Hohlkonus 60 ist ein Kranz von acht Schaufeln 62 angeformt.

Der obere Diffusor 54 ist auf den unteren Diffusor 70 mittels einer Nut-Feder-Verbindung 18 aufgesteckt.

Auf das obere Ende 10 der Antriebswelle 2 ist über eine noch zu beschreibende Nabe 64 eine hohlkonische Nabe 64 einer unteren Schale 66 mit einer sich nach oben konisch erweiternden Umfangswand 68 gesteckt.

Die untere Schale 66 kann von der Antriebswelle 2 in Umlauf gesetzt werden und ist in Längsrichtung der Antriebswelle 2 verschiebbar, entweder in eine Stellung, in der ihr Umfangsrand 72 mit dem Umfangsrand 74 der oberen Schale 53 über eine Dichtung 76 in dichtenden Schluß zu bringen ist (in Fig. 2 links dargestellt) oder in der ihr Umfangsrand 72 von dem Umfangsrand 74 abgehoben ist (in Fig. 2 rechts dargestellt). Beide Umfangsränder 72, 74 sind von einem Umfangsrand 85 einer Wanne 86 umschlossen, der mittels eines Halters 80 an der Außenseite der oberen Schale 53 befestigt ist. Im Umfangsrand 85 der Wanne 86 befinden sich Durchbrechungen 82, durch die die Partikel abgeführt werden, wenn die untere Schale 66 von der oberen Schale 53 abgehoben ist. Die Durchbrechungen 82 münden radial außen in einem Abführungsgehäuse 84 für in der Zentrifuge Z abgeschiedene Partikel, das mit der Auslaßleitung Z3 (siehe auch Fig. 1) für die Partikel verbunden ist. An der Auslaßleitung Z3 befindet sich ein Partikel-Detektor 120 mit einer Membran 122, der ein Signal abgibt, wenn hinreichend viele Partikel die Auslaßleitung Z3 durchströmen.

Die untere Schale 66 begrenzt unterseitig mit der Wanne 86 einen Raum 88, in den über Bohrungen 90 in der Wanne 86 und im Träger 94 Wasser einzuführen ist, das als Druckmittel zum Anheben der unteren Schale 66 und zum Andrücken der unteren Schale 66 an die obere Schale dient. Diese Bohrungen 90 kommunizieren mit einem Zuführungsraum 92 in einem Träger 94 der Wanne 86, an dem die Wanne 86 mittels einer Schraube 126 angeschraubt ist, deren gezahnter Kopf 128 von unten in den Boden 67 der unteren Schale 66, auch wenn die untere Schale 66 angehoben ist, ragt, so daß stets eine drehfeste Verbindung zwischen dem Träger 94 und der Wanne 86 vorliegt. In dem Zuführungsraum 92 mündet eine zweifach abgeknickte Leitung 96, deren Einlaßende 98 als DichtungsEinsteckmuffe für ein koaxiales Doppelrohr 100 ausgebildet ist. Durch eine innere Leitung 102 in dem Doppelrohr 100 kann somit über einen Einlaß 104 und ein für diesen Zweck zu öffnendes Elektroventil EV1 Wasser als Druckmittel zum Anheben der unteren Schale 66 in den Raum 88 eingeführt werden. Eine die Leitung 102 umgebende Rückführleitung 116 führt über ein Elektroventil EV3 zu der Abführleitung D (siehe auch Fig. 1). Zum Abführen von in der Zentrifuge Z abgeschiedenen Partikeln durch Absenken der unteren Schale 66 wird das Elektroventil EV1 geschlossen und Wasser beim Absenken der unteren Schale 66 aus dem Raum 88 über die Rückführleitung 116 durch ein dann geöffnetes Elektroventil EV2 abgeführt. Der Raum 88 ist dabei durch Leitungen 112, 113 in der Wand der Wanne 86 und im Träger 94 mit der Leitung 96 und der Rückführleitung 116 verbunden. Bei der Zuführung von Wasser in den Raum 88 sind - vorzugsweise aus Polyamid bestehende - Dichtungen 114 an einem mittels einer Federanordnung 116 nach oben gedrückten Schließkörper 118 gegen untere Mündungen von oberen Abschnitten der Leitungen 112 gedrückt. Bei der Abführung von Wasser aus dem Raum 88 sind wegen des Absenkens der unteren Schale 66 diese Mündungen geöffnet.

An die Zuführungsleitung 30 sind drei Unterdrucksensoren 106, 108, 110 handelsüblicher Bauart angesetzt. Der Unterdruck, dem die Unterdrucksensoren 106, 108, 110 ausgesetzt sind, liegt auch an einem Elektroventil EV3. Das Elektroventil EV3 wird beim Absenken der unteren Schale 66 geöffnet, um in den Innenraum Zi der Zentrifuge Z während des Abführens der in der Zentrifuge Z abgeschiedenen Partikel Luft - vorzugsweise Druckluft - zu lassen und um die Unterdrucksensoren 106, 108, 110 nullen zu können. Der Unterdrucksensor 106 spricht beispielsweise auf -0,000 bar, der Unterdrucksensor 108 auf -0,222 bar und der Unterdrucksensor 110 auf -0,290 bar an.

Der Unterdrucksensor 106 hält die Zentrifuge Z an, wenn kein Unterdruck in dem Flüssigkeitseinlaß Z1 ist, der zu der Leitung D führt.

Der Unterdrucksensor 108 erfaßt die Menge der in der Zentrifuge Z abgeschiedenen Partikel. Überschreitet diese Menge und damit der Unterdruck ein vorgegebenes einstellbares Maß, löst er das Absenken der unteren Schale 66 und damit die Abführung der Partikel aus der Zentrifuge Z aus.

Der Unterdrucksensor 110 hält die Zentrifuge an, wenn die Menge der in der Zentrifuge Z abgeschiedenen Partikel und damit der Unterdruck bei einem Fehler, etwa einem Ausfall des Unterdrucksensors 108, ein maximal zulässiges Maß überschreitet. Die Steuerung der Elektroventile EV1, EV2, EV3 erfolgt mittels einer - nicht dargestellten, Zeitgeber enthaltenden - elektronischen Steuereinheit, die ihrerseits von Signalen der Ultraschallsensoren 106, 108, 110 und des Partikel-Detektors 120 gesteuert ist.

## Patentansprüche

1. Verfahren zur Entfernung von Partikeln, insbesondere aus Glas, die bei einem Bearbeitungsprozeß, insbesondere bei einem Schleifprozeß, in eine Flüssigkeit, insbesondere in Wasser, geraten und zur Rückführung der von den Partikeln befreiten Flüssigkeit zum Bearbeitungsprozeß,
**dadurch gekennzeichnet,**
daß die von dem Bearbeitungsprozeß abgeführte, die Partikel enthaltende Flüssigkeit durch Schwerkraftabsetzung teilweise von den Partikeln befreit wird,
daß die teilweise von den Partikeln befreite Flüssigkeit zentrifugiert wird,
daß die beim Zentrifugieren im wesentlichen vollständig von den Partikeln befreite Flüssigkeit wieder in den Bearbeitungsprozeß rückgeführt wird,
daß zusammen mit Resten der Flüssigkeit beim Zentrifugieren abgeschiedene Partikel mittels eines Filters von den Resten der Flüssigkeit getrennt werden und daß auch die Reste der Flüssigkeit wieder in den Bearbeitungsprozeß rückgeführt werden.

2. Verfahren nach Anspruch 1, dadurch gekennzeichnet, daß die Flüssigkeit vor ihrer Rückführung in den Bearbeitungsprozeß gekühlt wird.

3. Anlage zur Durchführung des Verfahrens nach Anspruch 1 oder 2, gekennzeichnet durch eine erste Leitungsanordnung (A, A1, A2, A3), die eine Abführpumpe (P1) einer Bearbeitungsmaschine (W) über eine - vorzugsweise manuell - verstellbare erste Ventilanordnung (SV1, SV2, SV3) mit wenigstens einem Klärbecken (K1, K2, K3) verbindet, durch eine zweite Leitungsanordnung (D1, D2, D3, D), die das wenigstens eine Klärbecken (K1, K2, K3) über eine - vorzugsweise manuell - verstellbare zweite Ventilanordnung (V1, V2, V3) und eine Förderpumpe (P2) mit einem Flüssigkeitseinlaß (Z1) einer Zentrifuge (Z) verbindet, durch eine dritte Leitungsanordnung (E, E1, E2, E3), die einen Flüssigkeitsauslaß (Z2) der Zentrifuge (Z) über eine - vorzugsweise manuell - verstellbare dritte Ventilanordnung (V4, V5, V6) mit dem wenigstens einen Klärbecken (K1, K2, K3) verbindet, durch eine Zuführpumpe (P3), die zentrifugierte Flüssigkeit aus dem wenigstens einen Klarbecken (K1, K2, K3) einem Flüssigkeitseinlaß (W1) der Bearbeitungsmaschine (W) über eine Leitung (B) zuführt, und durch eine vierte Leitungsanordnung (J1, J2, J3, J4, J5, J6, J), die einen Partikelauslaß (Z3) der Zentrifuge (Z) über ein Filter (F) mit wenigstens einem Klärbecken (K1, K2, K3) verbindet.

4. Anlage nach Anspruch 3, dadurch gekennzeichnet, daß zur Abführung zentrifigierter Flüssigkeit von der dritten Leitungsanordnung (E, E1, E2, E3) eine Abführleitung (L) abgezweigt ist, in der sich eine - vorzugsweise manuell - verstellbare vierte Ventilanordnung (V7) befindet.

5. Anlage nach Anspruch 3 oder 4, dadurch gekennzeichnet, daß zur Speisung der Ansaugseite der Förderpumpe (P2) mit einer Leitungsflüssigkeit von der zweiten Leitungsanordnung (D1, D2, D3, D) eine erste Zuführungsleitung (H) abgezweigt ist, in der sich eine - vorzugsweise manuell - verstellbare fünfte Ventilanordnung (V8) befindet.

6. Anlage nach einem der Ansprüche 3 bis 5, dadurch gekennzeichnet, daß zur Speisung des wenigstens einen Klärbeckens (K1, K2, K3) mit einer Leitungsflüssigkeit von der dritten Leitungsanordnung (E, E1, E2, E3) eine zweite Zuführungsleitung (I) abgezweigt ist, in der sich eine - vorzugsweise manuell - verstellbare sechste Ventilanordnung (V9) befindet.

7. Anlage nach einem der Ansprüche 3 bis 6, dadurch gekennzeichnet, daß zur Steuerung des Partikelauslasses (Z3) der Zentrifuge (Z) mit-einer Leitungsflüssigkeit eine zu einem Steuereinlaß (104) der Zentrifuge (Z) führende dritte Zuführungsleitung (G) vorgesehen ist, in der sich eine - vorzugsweise manuell - verstellbare siebte Ventilanordnung (V10) befindet.

8. Anlage nach einem der Ansprüche 3 bis 7, dadurch gekennzeichnet, daß sich in dem wenigstens einen Klärbecken (K1, K2, K3) eine Kühlschlange (C1) befindet, die im Kreislauf (C) von einem Kühler (C2) mit einem flüssigen Kühlmittel beschickt wird.

9. Zentrifuge, insbesondere für ein Verfahren nach Anspruch 1 oder 2 und/oder eine Anlage nach einem der Ansprüche 3 bis 8, gekennzeichnet durch eine vertikale Antriebswelle (2), an deren oberem Ende (10) eine sich nach unten erweiternde Diffusoranordnung (54, 70) angebracht ist, in die von oben durch eine Einführungsleitung (30) eine Partikel enthaltende Flüssigkeit einzuführen ist, durch eine mit dem oberen Ende der Diffusoranordnung (54, 70) verbundene, sich nach unten erweiterende obere Schale (53), durch Löcher (48) in einer den Raum (55) zwischen der Diffusoranordnung (54, 70) und der oberen Schale (53) oben begrenzenden Wand (22) zur Abführung von von Partikeln befreiter Flüssigkeit, durch eine die Diffusoranordnung (54, 70) umschließende, sich nach oben erweiterende untere Schale (66), deren oberer Umfangsrand (72) einen Durchmesser hat, der im wesentlichen gleich dem Durchmesser des unteren Umfangsrands (74) der oberen Schale (53) ist und abgedichtet an diesen unteren Umfangs- rand (74) andrückbar ist, durch eine Nabe (64) an einem unteren Boden (67) der unteren Schale (66), die in Längsrichtung der Antriebswelle (2) relativ zu der Antriebswelle (2) abgedichtet verschiebbar ist, und durch eine Leitungsanordnung (82, 84) zur Abführung von abzentrifugierten Partikeln und Resten der Flüssigkeit, die bei voneinander abgehobenen Schalen (53, 66) zwischen dem unteren Umfangsrand (74) der oberen Schale (53) und dem oberen Umfangsrand (72) der unteren Schale (66) mündet.

10. Zentrifuge nach Anspruch 9, dadurch gekennzeichnet, daß die Diffusoranordnung (54, 70) einen oberen Diffusor (54) und einen unteren Diffusor (70) aufweist, wobei der Öffnungswinkel des unteren Diffusors (70) größer ist als der Öffnungswinkel des oberen Diffusors (54).

11. Zentrifuge nach Anspruch 9 oder 10, dadurch gekennzeichnet, daß die Diffusoranordnung (54, 70) zu ihrer Befestigung am oberen Ende (10) der Antriebswelle (2) einen inneren Ringflansch (12) aufweist, der auf das obere Ende (10) der Antriebswelle (2) aufzusetzen ist und der mit einer ihn von oben durchsetzenden, in ein Innengewinde (3) im oberen Ende (10) der Antriebswelle (2) eingreifenden Schraube (16) am oberen Ende (10) der Antriebswelle (2) zu befestigen ist.

12. Zentrifuge nach einem der Ansprüche 9 bis 11, dadurch gekennzeichnet, daß an das obere Ende (10) der Antriebswelle (2) unterhalb der unteren Schale (66) eine die untere Schale (66) umfassende Wanne (86) mit einem Umfangsrand (85) angesetzt ist, der den oberen Umfangsrand (72) der unteren Schale (66) abgedichtet umfaßt, und daß die Wanne (86) mit der unteren Schale (66) einen Raum (88) begrenzt, in den ein Druckmittel zum Anheben der unteren Schale (66) einführbar und aus dem das Druckmittel zum Absenken der unteren Schale (66) abführbar ist.

13. Zentrifuge nach einem der Ansprüche 10 bis 12, dadurch gekennzeichnet, daß das untere Ende des oberen Diffusors (54) auf das obere Ende des unteren Diffusors (70) mittels einer abgedichteten Steckverbindung (59) aufgesteckt ist.

14. Zentrifuge nach einem der Ansprüche 10 bis 13, dadurch gekennzeichnet, daß sich die Wand (22) am oberen Ende des oberen Diffusors (54) befindet und einen nach oben über eine Ringwand (24) abgesetzten Umfangsflansch (26) aufweist, der auf einem Kragen (57) am oberen Ende der oberen Schale (53) aufsitzt.

15. Zentrifuge nach Anspruch 14, dadurch gekennzeichnet, daß die Ringwand (24) eine Abführungskammer (43) begrenzt, in der die Löcher (48) münden.

16. Zentrifuge nach Anspruch 14 oder 15, dadurch gekennzeichnet, daß der Umfangsflansch (26) zusammen mit einem die Abführungskammer (43) oben begrenzenden Ringdeckel (40) mittels einer Überwurfmutter (99) auf dem Kragen (57) befestigt ist.

17. Zentrifuge nach Anspruch 15 oder 16, dadurch gekennzeichnet, daß in der Abführungskammer (43) radial nach innen zu axial nach oben gerichteten Abführungskanälen (45) führende Eintrittskanäle (46) vorgesehen sind.

18. Zentrifuge nach Anspruch 17, dadurch gekennzeichnet, daß die Abführungskanäle (45) um einen mit der Einführungsleitung (30) verbundenen Einführungsrohrabschnitt (28) herum angeordnet sind.

19. Zentrifuge nach Anspruch 18, dadurch gekennzeichnet, daß der Einführungsrohrabschnitt (28) abgedichtet eine mit einem Abführungsstutzen (50) versehene Kammer (32) durchsetzt, die mit den Eintrittskanälen (46) und den Abführungskanälen (43) einstückig ist.

20. Zentrifuge nach einem der Ansprüche 10 bis 19, dadurch gekennzeichnet, daß in der Innenoberfläche des oberen Diffusors (54) im wesentlichen in Radialebenen des oberen Diffusors (54) verlaufende Nuten (56) vorgesehen sind.

21. Zentrifuge nach einem der Ansprüche 12 bis 20, dadurch gekennzeichnet, daß sich die Nabe (64) der unteren Schale (66) nach oben konisch verjüngt und auf eine sich ebenfalls nach oben konisch verjüngende Nabe (87) der Wanne (86) aufgesteckt ist und daß die Nabe (87) der Wanne (86) auf das sich ebenfalls konisch nach oben verjüngende obere Ende (10) der Antriebswelle (2) aufgesteckt ist.

22. Zentrifuge nach einem der Ansprüche 9 bis 21, dadurch gekennzeichnet, daß sich am Umfang der Diffusoranordnung (54, 70) eine in den Bereich zwischen den Umfangsrändern (72, 74) der Schalen (53, 66) radial gerichtete erste Ringscheibe (14) befindet.

23. Zentrifuge nach einem der Ansprüche 10 bis 22, dadurch gekennzeichnet, daß sich in einem Mittelbereich des oberen Diffusors (54) eine radial gerichtete zweite Ringscheibe (20) befindet.

24. Zentrifuge nach einem der Ansprüche 10 bis 23, dadurch gekennzeichnet, daß der untere Diffusor (70) in den Innenraum (Zi) der Zentrifuge (Z) gerichtete Durchbrechungen (71) aufweist.

25. Zentrifuge nach einem der Ansprüche 10 bis 24, dadurch gekennzeichnet, daß sich an der Innenoberfläche des unteren Diffusors (70) - vorzugsweise acht - im wesentlichen in Radialebenen des unteren Diffusors (70) verlaufende Schaufeln (62) befinden.

26. Zentrifuge nach einem der Ansprüche 9 bis 25, dadurch gekennzeichnet, daß der obere Umfangsrand (72) der unteren Schale (66) axial an den unteren Umfangsrand (74) der oberen Schale (53) über eine Ringdichtung (76) - vorzugsweise aus Polyamid - andrückbar ist.

27. Zentrifuge nach einem der Ansprüche 12 bis 26, dadurch gekennzeichnet, daß sich zwischen dem oberen Umfangsrand (72) der unteren Schale (66) und dem Umfangsrand (85) der Wanne (86) eine Ringdichtung (75) - vorzugsweise aus Kautschuk - und darüber ein Ringabstreifer(78) - vorzugsweise aus Polyamid - befinden.

28. Zentrifuge nach einem der Ansprüche 9 bis 27, dadurch gekennzeichnet, daß an die Einführungsleitung (30) drei einstellbare Unterdrucksensoren (106, 108, 110) angeschlossen sind, von denen der erste (106) die Beschickung der Zentrifuge (Z) mit Partikeln enthaltender Flüssigkeit steuert, von denen der zweite (108) die Abführung der in der Zentrifuge (Z) abgeschiedenen Partikel steuert und von denen der dritte (110) die Zentrifuge (Z) anhält, wenn der Volumenanteil der Partikel im Innenraum (Zi) der Zentrifuge (Z) infolge eines Fehlers ein vorgegebenes Maß übersteigt.

29. Zentrifuge nach Anspruch 28, dadurch gekennzeichnet, daß sich an der Einführungsleitung (30) ein Elektroventil (EV3) befindet, das zur Abführung von Partikeln aus der Zentrifuge (Z) Luft in den Innenraum (Zi) der Zentrifuge (Z) läßt, die eine Trennung der Schalen (53, 66) voneinander unterstützt und eine Nullung der Unterdrucksensoren (106, 108, 110) ermöglicht.
